# EUROPÄISCHE PATENTSCHRIFT

(11) **EP 1 319 566 B1**
(45) Veröffentlichungstag und Bekanntmachung des Hinweises auf die Patenterteilung: **16.11.2005**
(21) Anmeldenummer: 02024651.8
(22) Anmeldetag: 05.11.2002
(51) Int. Cl.: B60T 8/36, B60T 13/68, B60T 15/02

(54) **Magnetspulen-Drucksensoreinheit**
Solenoid and pressure sensor unit
Ensemble pour solénoide et capteur de pression

(30) Priorität: 14.12.2001 DE 10161501
(43) Veröffentlichungstag der Anmeldung: 18.06.2003
(73) Patentinhaber: WABCO GmbH & CO. OHG, 30453 Hannover (DE)
(72) Erfinder: Dreyer, Werner, 30826 Garbsen (DE); Kiel, Bernd, 31515 Wunstorf (DE); König, Heinz-Werner, 30890 Barsinghausen (DE); Schappler, Hartmut, 30455 Hannover (DE)
(74) Vertreter: Schrödter, Manfred

(56) Entgegenhaltungen:
- EP-A- 0 157 944
- EP-A- 0 644 092
- EP-A- 0 681 128
- EP-A- 0 845 397
- DE-A- 19 528 812
- US-A- 4 828 335

## Beschreibung

Die Erfindung betrifft eine Magnetspulen-Drucksensoreinheit für mit Magnetregelventilen ausgestattete EBS-Radmodulator-Steuergeräte gemäß Oberbegriff des Anspruchs 1.

Es sind EBS-Anhänger-Steuergeräte bekannt (z. B. WABCO Steuergerät-Anhänger-EBS Nr. 480 102 000 0), mit auf einer Platine befindlichen, integrierten, elektronischen Steuereinheit und integrierten auf der Platine angeordneten Drucksensoren sowie mit einer Magnetventileinheit aus zwei Relaisventilen und zwei Dreifach-Magnetventileinheiten mit einem Belüftungsventil, einem Entlüftungsventil und einem Redundanzventil. Die Drucksensoren sind als hybride Bauteile ausgeführt, die zum Druckanschluß über einen Pneumatik-Schnorchel verfügen. Zum Druckanschluß für die Sensoren sind Bohrungen vorgesehen. Die Magnetventileinheiten weisen Anschlußstifte auf. Die Magnetventileinheiten werden zur Montage in die Platine gesteckt, wobei die Anschlußstifte der Magneteinheiten in entsprechende Aufnahmebuchsen auf der Platine eingeführt werden. Die Pneumatik-Schnorchel der Drucksensoren werden unter Verwendung von O-Ringen druckdicht mit den Bohrungen der Magnetventileinheiten verbunden. Nachteilig ist die große Bauweise, die nur für zentrale Elektroniken so durchführbar ist. Auf der Platine wird viel Platz für die Sensoren verbraucht. Die Schnorchel-Druckluftverbindung ist aufwendig. Die Montage gestaltet sich aufwendig und es besteht die Gefahr von Fehlern und Störungen.

Die Aufgabe der vorliegenden Erfindung besteht darin, eine Magnetspulen-Drucksensoreinheit der eingangs genannten Art so auszubilden, daß eine kleine Bauweise möglich ist, die Druckluftverbindung zu den Drucksensoren vereinfacht und die Gefahr von Störungen weitestgehend vermieden ist.

Diese Aufgabe wird durch die Erfindung gemäß Anspruch 1 gelöst. Vorteilhafte und zweckmäßige Weiterbildungen der Erfindung sind in den Unteransprüchen angegeben.

Durch die erfindungsgemäße Aufgabenlösung wird der Sensor in den Magnetspulenkörper integriert, so daß aufwendige Dichtungsmaßnahmen entfallen können. Der Sensor sitzt und mißt den ausgesteuerten Druck somit dort, wo auch der zu sensierende Ausgangsdruck am Ventil ansteht, wodurch die Gefahr von Störungen verringert ist. Kabel für die Magnetspulen- und Sensoranbindung können entfallen.

Gemäß einer vorteilhaften Weiterbildung der erfindungsgemäßen Aufgabenlösung sind die durch den Spulenkörper durchgeleiteten Leiter als Stanzgitter ausgebildet, wobei zwei separate Stanzgitter, ein Magnetventilstanzgitter und ein Drucksensorstanzgitter, vorgesehen sind. Hierdurch werden die Störanfälligkeit, insbesondere durch Schwingungen, und der Platzbedarf weiter reduziert.

Die Erfindung soll nachfolgend anhand der beigefügten Zeichnungen, die ein Ausführungsbeispiel einer erfindungsgemäßen Magnetspulen-Drucksensoreinheit zeigen, näher erläutert werden.

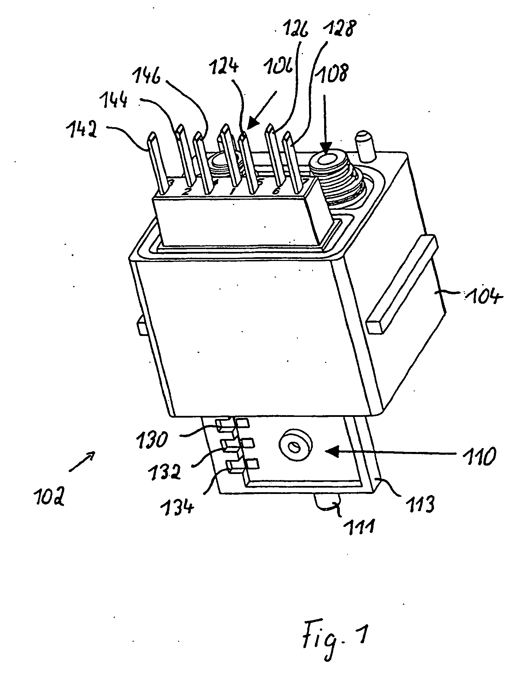

Es zeigt
- Fig. 1: eine schematische perspektivische Darstellung einer Magnetspulen-Drucksensoreinheit,

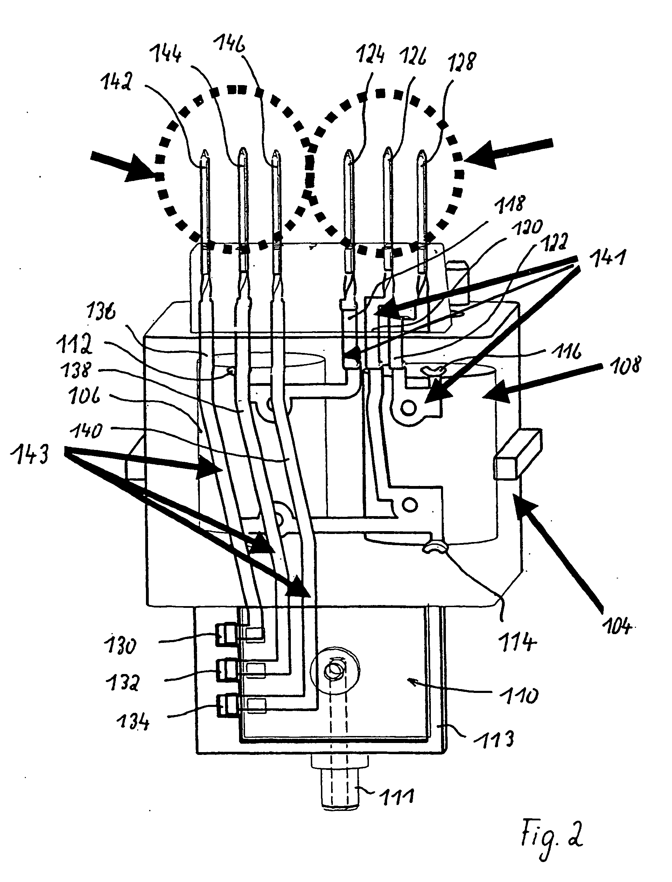

- Fig. 2: die Magnetspulen-Drucksensoreinheit nach Fig. 1 in einer schematischen, den inneren Aufbau zeigenden Darstellung und
- Fig. 3: eine pneumatische Schaltung der Magnetspulen-Drucksensoreinheit.

Gleiche Bauteile in den Figuren der Zeichnung sind mit den gleichen Bezugszeichen versehen.

Die Zeichnung zeigt eine Magnetspulen-Drucksensoreinheit 102 für mit Magnetregelventilen ausgestatte, über einen CAN-Datenbus angesteuerte EBS-Radmodulator-Steuergeräte von elektronisch geregelten elektro-pneumatischen Bremsanlagen (nicht dargestellt).

Die Magnetspulen-Drucksensoreinheit 102 weist einen Spulenkörper 104, zwei Spulen 106, 108 und einen in den Spulenkörper 104 integrierten Drucksensor 110 mit einem Druckleitungsanschluß 111 auf. Der Drucksensor ist in einem Spulenkörperansatz 113 angeordnet.

Elektrische Anschlüsse 112, 114, 116 der Spulen 106, 108 sind über durch den Spulenkörper durchgeführte Leiter 118, 120, 122 mit Spulenkontaktstiften 124, 126, 128 verbunden. Die Spulenkontaktstifte sind mit einer Platine eines nicht dargestellten elektronischen Steuergerätes, beispielsweise eines EBS-Radmodulator-Steuergerätes verbunden, vorzugsweise durch Einstecken in auf der Platine fest aufgelötete Kontaktbuchsen (nicht dargestellt).

Der Drucksensor 110 weist elektrische Anschlüsse 130, 132, 134 auf, die über durch den Spulenkörper 104 durchgeleitete Leiter 136, 138, 140 mit Steckkontaktstiften 142, 144, 146 verbunden sind, welche mit der Platine des nicht dargestellten elektronischen Steuergerätes (z. B. EBS-Radmodulator-Steuergerät), vorzugsweise durch Einstecken in auf der Platine fest angeordnete Kontaktbuchsen (nicht dargestellt) verbunden sind.

Die Leiter 118, 120, 122 und 136, 138, 140 sind im Spulenkörper 104 eingebettet und vorzugsweise als Stanzgitter ausgebildet, wobei zwei separate Stanzgitter, ein Magnetventilstanzgitter 141 und ein Sensorstanzgitter 143, vorgesehen sind.

Der Spulenkörper 104 wird durch Umspritzung der Spulen 106, 108 hergestellt, wobei die Kontaktstifte 124, 126, 128 und 142, 144, 146 sowie der Drucksensor 110 im Ansatz 113 mit in die Umspritzung integriert sind.

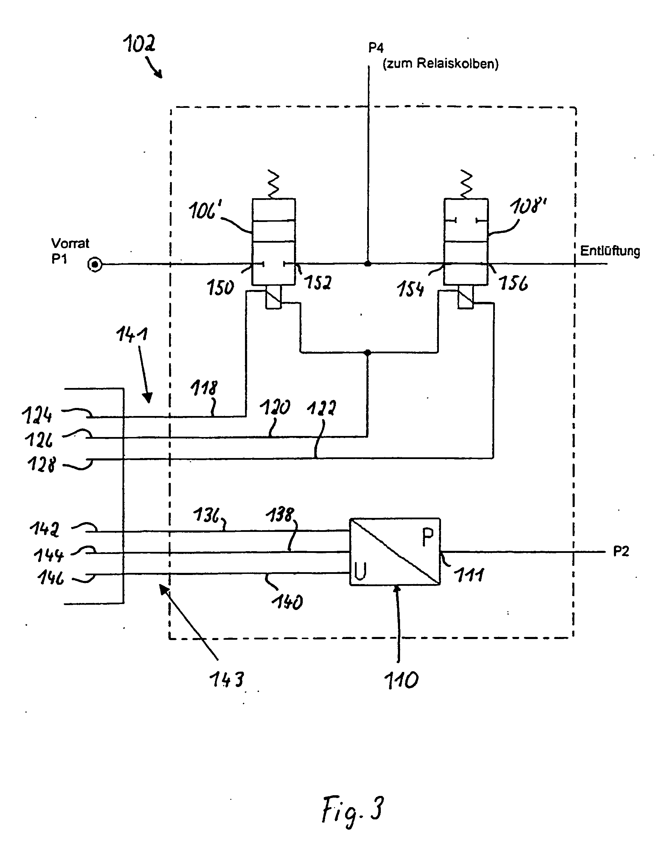

Die Fig. 3 zeigt eine pneumatische Schaltung der Magnetspulen-Drucksensoreinheit 102 mit dem Drucksensor 110 und mit den beiden Magnetventilen 106' und 108', die hier als 2/2 Wege-Magnetventile ausgebildet sind und die über die elektrischen Leiter 118, 120, 122 und die elektrischen Kontaktstifte 124, 126, 128 von einem nicht dargestellten Steuergerät gesteuert werden.

Der pneumatische Eingang 150 des ersten Magnetventils 106' ist mit dem Versorgungsdruck P1 verbunden. Der pneumatische Ausgang 152 dieses Magnetventils ist mit dem Eingang eines nicht dargestellten Relaisventils (Ausgangsdruck P4) und mit dem pneumatischen Eingang 154 des zweiten Magnetventils 108' verbunden. Der pneumatische Ausgang des Relaisventils ist mit den ebenfalls nicht dargestellten Bremszylindern verbunden. Der pneumatische Ausgang 156 des zweiten Magnetventils 108' ist mit einer Drucksenke (Entlüftung) verbunden. Der Drucksensor 110 wird über einen pneumatischen Anschluß 111 mit einem die Bremszylinder beaufschlagenden Druck P2 beaufschlagt und erzeugt ein diesem Druck P2 entsprechendes elektrisches Signal, das über die elektrischen Leiter 136, 138, 140 und die Kontaktstife 142, 144, 146 zur Platine (nicht dargestellt) des elektrischen Steuergerätes zugeführt wird, wodurch sich ein geschlossener Regelkreis ergibt.

Die Fig. 3 zeigt die pneumatische Schaltung im Zustand "Fahren", in dem die Ventilmagnete des ersten und zweiten Magnetventils 106' und 108' erregt sind, wobei das erste Magnetventil gesperrt ist und das zweite Magnetventil offen ist, so daß der Bremszylinderdruck ins Freie entlüftet wird. Zum Druckaufbau in den Bremszylindern wird der am Eingang des ersten stromlos offenen Magnetventils 106' anstehende Druck über den Ausgang zu den Bremszylindern durchgesteuert und wird das zweite Magnetventil 108' gesperrt. Zum Druckhalten wird der Ventilmagnet des ersten Magnetventils 106' erregt, wodurch dieses Ventil geschlossen und der am Eingang anstehende Druck vom Ausgang abgesperrt wird.

## Patentansprüche

1. Magnetspulen-Drucksensoreinheit (102) für mit Magnetregelventilen (106', 108') ausgestattete, über einen CAN-Datenbus angesteuerte EBS-Radmodulator-Steuergeräte von elektronisch geregelten elektro-pneumatischen Bremsanlagen, mit wenigstens einer in einem Spulenkörper (104) angeordneten Spule (106, 108) mit elektrischen Anschlüssen (112, 114, 116), mit einem zur Erfassung des ausgesteuerten Druckes vorgesehenen Drucksensor (110) mit elektrischen Anschlüssen (130, 132, 134) und mit einer Platine für alle Komponenten des Steuergerätes, auf der Aufnahmebuchsen für auf dem Spulenkörper (104) angeordnete, mit den Anschlüssen (112, 114, 116) der Spule (106, 108) verbundene Steckstifte (124, 126, 128) angeordnet sind, **dadurch gekennzeichnet, daß** der Drucksensor (110) in den Spulenkörper (104) integriert ist und daß für den Drucksensor (110) auf dem Spulenkörper (104) angeordnete Steckkontaktstifte (142, 144, 146) in Aufnahmebuchsen der Platine einsteckbar sind, wobei die elektrischen Anschlüsse (112, 114, 116; 130, 132, 134) der Spulen (106, 108) und des Drucksensors (110) über durch den Spulenkörper (104) durchgeleitete, im Spulenkörper eingebettete Leiter (118, 120, 122; 136, 138, 140) mit den Steckkontaktstiften (124, 126, 128; 142, 144, 146) verbunden sind.

2. Magnetspulen-Drucksensoreinheit nach Anspruch 1, **dadurch gekennzeichnet, daß** die Leiter (118, 120, 122; 136, 138, 140) als Stanzgitter (141, 143) ausgebildet sind.

3. Magnetspulen-Drucksensoreinheit nach Anspruch 2, **dadurch gekennzeichnet, daß** zwei separate Stanzgitter, ein Stanzgitter (141) für die Magnetspule (106, 108) und ein Stanzgitter (143) für den Drucksensor (110) vorgesehen sind.

4. Magnetspulen-Drucksensoreinheit nach Anspruch 1 oder 3, **dadurch gekennzeichnet, daß** der Drucksensor (110) in einem Ansatz (113) des Spulenkörpers (104) angeordnet ist.

5. Magnetspulen-Drucksensoreinheit nach Anspruch 1 oder 4, **dadurch gekennzeichnet, daß** der Spulenkörper (104) nebst Ansatz (113) durch eine Kunststoffumspritzung der Magnetspulen (106, 108) gebildet ist.

6. Magnetspulen-Drucksensoreinheit nach einem der vorhergehenden Ansprüche mit folgenden Merkmalen:
a) ein pneumatischer Eingang (150) des einen Magnetventils (106') ist mit dem Versorgungsdruck (P1) verbunden,
b) ein pneumatischer Ausgang (152) des ersten Magnetventils (106') ist mit einem Relaisventil und mit einem pneumatischen Eingang (154) des zweiten Magnetventils (108') verbunden,
c) ein pneumatischer Ausgang (156) des zweiten Magnetventils (108') ist mit einer Drucksenke (Entlüftung) verbunden,
d) ein pneumatischer Anschluß (111) des Drucksensors (110) ist mit dem Bremszylinderdruck (P2) verbunden,
e) elektrische Steuerleitungen (118, 120, 122) verbinden die Magnetventile (106', 108') mit einem elektronischen Steuergerät,
f) elektrische Signalleitungen (136, 138, 140) verbinden den Signalausgang des Drucksensors (110), der dem Bremszylinderdruck entsprechende Signale erzeugt, mit dem elektronischen Steuergerät und
g) dem elektronischen Steuergerät wird eingangseitig eine vom Fahrer initiierte elektrische Bremsvorgabe zugeführt.

7. Magnetspulen-Drucksensoreinheit nach Anspruch 6, **dadurch gekennzeichnet, daß**
a) zum Druckaufbau in den Bremszylindern das erste Magnetventil (106') durch Entregung in die Offenstellung und das zweite Magnetventil (108') durch Entregung in die Sperrstellung gesteuert werden,
b) zum Druckabbau der Bremse das erste Magnetventil (106') durch Erregung in die Sperrstellung und das zweite Magnetventil (108') durch Erregung in die Offenstellung gesteuert werden und
c) zum Druckhalten das erste Magnetventil (106') durch Erregung in die Sperrstellung und das zweite Magnetventil (108') durch Entregung in der Sperrstellung gesteuert werden.

## Claims

1. Solenoid coil pressure sensor unit (102) for EBS wheel modulator control devices of electronically controlled electro-pneumatic braking systems, which control devices are provided with solenoid control valves (106', 108') and are controlled by way of a CAN data bus, having at least one coil (106, 108) having electrical connections (112, 114, 116) which is arranged in a coil body (104), having a pressure sensor (110) having electrical connections (130, 132, 134) which is provided for ascertaining the delivered pressure, and having a board for all components of the control device, on which board there are arranged receiving sockets for plug pins (124, 126, 128), which pins are arranged on the coil body (104) and are connected to the connections (112, 114, 116) of the coil (106, 108), **characterised in that** the pressure sensor (110) is integrated into the coil body (104); and plug contact pins (142, 144, 146) for the pressure sensor (110) which are arranged on the coil body (104) are arranged to be inserted into receiving sockets of the board, the electrical connections (112, 114, 116; 130, 132, 134) of the coils (106, 108) and of the pressure sensor (110) being connected to the plug contact pins (124, 126, 128; 142, 144, 146) by way of conductors (118, 120, 122; 136, 138, 140) which pass through the coil body (104) and which are embedded in the coil body.

2. Solenoid coil pressure sensor unit according to claim 1, **characterised in that** the conductors (118, 120, 122; 136, 138, 140) are in the form of stamped-out arrays (141,143).

3. Solenoid coil pressure sensor unit according to claim 2, **characterised in that** two separate stamped-out arrays - one stamped-out array (141) for the solenoid coil (106, 108) and one stamped-out array (143) for the pressure sensor (110) - are provided.

4. Solenoid coil pressure sensor unit according to claim 1 or 3, **characterised in that** the pressure sensor (110) is arranged in a projecting portion (113) of the coil body (104).

5. Solenoid coil pressure sensor unit according to claim 1 or 4, **characterised in that** the coil body (104) together with the projecting portion (113) is formed by a plastics material injection-moulded around the solenoid coils (106, 108).

6. Solenoid coil pressure sensor unit according to one of the preceding claims, having the following features:
a) a pneumatic input (150) of a first solenoid valve (106') is connected to the supply pressure (P1),
b) a pneumatic output (152) of the first solenoid valve (106') is connected to a relay valve and to a pneumatic input (154) of the second solenoid valve (108'),
c) a pneumatic output (156) of the second solenoid valve (108') is connected to a pressure sink (vent),
d) a pneumatic connection (111) of the pressure sensor (110) is connected to the brake cylinder pressure (P2),
e) electrical control lines (118, 120, 122) connect the solenoid valves (106', 108') to an electronic control device,
f) electrical signal lines (136, 138, 140) connect the signal output of the pressure sensor (110) - which generates signals that correspond to the brake cylinder pressure - to the electronic control device, and
g) the electronic control device is supplied, on the input side, with an electrical braking instruction initiated by the driver.

7. Solenoid coil pressure sensor unit according to claim 6, **characterised in that**,
a) for building up pressure in the brake cylinders, the first solenoid valve (106') is set to the open position by de-energisation and the second solenoid valve (108') is set to the closed position by de-energisation,
b) for reducing brake pressure, the first solenoid valve (106') is set to the closed position by energisation and the second solenoid valve (108') is set to the open position by energisation, and
c) for maintaining pressure, the first solenoid valve (106') is set to the closed position by energisation and the second solenoid valve (108') is set to the closed position by de-energisation.

## Revendications

1. Unité de capteur de pression à bobines magnétiques (102) pour appareils de commande de modulateurs de roues EVS, équipés de soupapes magnétiques de régulation (106',108') et commandés par un bus de données CAN, d'installations de freinage électro-pneumatiques réglées par voie électronique, comportant au moins une bobine (106,108) disposée dans un corps de bobine (104), des raccords électriques (112,114,116), un capteur de pression (110) prévu pour détecter la pression commandée, des bornes électriques (130,132,134) et une platine prévue pour tous les composants de l'appareil de commande, et sur laquelle sont disposées des douilles de réception pour des broches d'enfichage (124,126,128) disposées sur le corps de bobine (104) et reliées aux bornes (112,114,116) de la bobine (106,108), **caractérisé en ce que** le capteur de pression (110) est intégré dans le corps de bobine (104) et que des tiges de contact à enfichage (142,144,146) disposées pour le capteur de pression (110) sur le corps de bobine (104), peuvent être enfichées dans des douilles de réception de la platine, les bornes électriques (112,114,116;130,132,134) des bobines (106,108) et du capteur de pression (106) étant reliées aux tiges de contact à enfichage (124,126,128; 142,144,146) au moyen de conducteurs (118,120,122; 136,138,140) guidés à travers le corps de bobine (104) et insérés dans le corps de bobine.

2. Unité de capteur de pression à bobines magnétiques selon la revendication 1, **caractérisée en ce que** les conducteurs (118,120,122; 136,138,140) sont agencés sous la forme de grilles découpées (141,143).

3. Unité de capteur de pression à bobines magnétiques selon la revendication 2, **caractérisée en ce qu'**il est prévu deux grilles découpées séparées, une grille découpée (141) pour la bobine magnétique (106,108) et une grille découpée (143) pour le capteur de pression (110).

4. Unité de capteur de pression à bobines magnétiques selon la revendication 1 ou 3, **caractérisée en ce que** le capteur de pression (110) est disposé dans un embout (113) du corps de bobine (104).

5. Unité de capteur de pression à bobines magnétiques selon la revendication 1 ou 4, **caractérisée en ce que** le corps de bobine (104) est formé, en dehors de l'embout (113), par un enrobage en matière plastique, réalisé par injection, des bobines magnétiques (106,108).

6. Unité de capteur de pression à bobines magnétiques selon l'une des revendications précédentes présentant les caractéristiques suivantes :
a) une entrée pneumatique (150) d'une soupape magnétique (106') est reliée à la pression d'alimentation (P1),
b) une sortie pneumatique (152) de la première soupape magnétique (106') est reliée à une soupape relais et à une entrée pneumatique (154) de la seconde soupape magnétique (108'),
c) une sortie pneumatique (156) de la seconde soupape magnétique (108') est reliée à un récepteur de pression (désaération),
d) un raccord pneumatique (111) du capteur de pression (110) est relié à la pression (P2) du cylindre de frein,
e) des lignes électriques de commande (118,120,122) relient les soupapes magnétiques (106',108') à un appareil de commande électronique,
f) des lignes électriques de transmission de signaux (136, 138,140) relient la sortie du signal du capteur de pression (110), qui produit des signaux qui correspondent à la pression du cylindre de frein, à l'appareil de commande électronique,
g) une prédétermination électrique de freinage déclenchée par le conducteur est envoyée côté entrée à l'appareil de commande électronique.

7. Unité de capteur de pression à bobines magnétiques selon la revendication 6, **caractérisé en ce que**
a) pour l'établissement de la pression dans les cylindres de frein, la première soupape magnétique (106') est commandée, par excitation, dans la position ouverte et la seconde soupape magnétique (108') est commandée, par désexcitation, dans la position de blocage,
b) pour la suppression de la pression du frein, la première soupape magnétique (106') est commandée, par excitation, dans la position de blocage et la seconde soupape magnétique (108') est commandée, par excitation, dans la position ouverte, et
c) pour le maintien de la pression, la première soupape magnétique (106') est commandée, par excitation, dans la position de blocage et la seconde soupape magnétique (108) est commandée, par désexcitation, dans la position de blocage.
